Europäisches Patentamt

European Patent Office

Office européen des brevets

(11) Veröffentlichungsnummer : **0 127 755**
**B1**

(12) **EUROPÄISCHE PATENTSCHRIFT**

(45) Veröffentlichungstag der Patentschrift :
05.04.89

(51) Int. Cl.⁴ : **F 27 D   3/14, H 02 K  44/06**

(21) Anmeldenummer : **84104419.1**

(22) Anmeldetag : **18.04.84**

(54) **Elektromagnetische  Metallschmelzenpumpe  zum  Ansaugen  und  Ausgeben  der  Metallschmelze  aus  einem Schmelzofen.**

(30) Priorität : 04.05.83 HU 151983

(43) Veröffentlichungstag der Anmeldung :
**12.12.84 Patentblatt 84/50**

(45) Bekanntmachung  des  Hinweises  auf  die  Patenterteilung : **05.04.89 Patentblatt 89/14**

(84) Benannte Vertragsstaaten :
**AT BE CH DE FR GB IT LI LU NL SE**

(56) Entgegenhaltungen :
**FR--A-- 1 205 683**
**FR--A-- 1 420 883**
**GIESSEREI, Band 69, Nr. 20, 27. September 1982,**
**Seiten 575-579; R. HANS: "Neue elektromagnetische**
**Pumpen für Aluminiumschmelzen"**

(73) Patentinhaber : **HIRADASTECHNIKAI ANYAGOK GYARA**
**Zrinyi utca 39**
**H-2600 Vác (HU)**

(72) Erfinder : **Ronaföldi, Arnold, Dipl.-Elektroing**
**Katowice u. 5**
**Miskolc (HU)**
Erfinder : **Ferencsik, Jòzsef, Dipl.-Maschinening**
**Vörösmarty u. 43**
**H-1064 Budapest (HU)**
Erfinder : **Doknas, János**
**Harkály u. 7**
**H-2600 Vác (HU)**
Erfinder : **Török, Làszlò**
**Degré Alajos u. 1**
**H-2600 Vác (HU)**

(74) Vertreter : **Patentanwälte Viering & Jentschura**
**Steinsdorfstrasse 6**
**D-8000 München 22 (DE)**

## Beschreibung

Die Erfindung betrifft eine elektromagnetische Metallschmelzenpumpe zum Ansaugen und Ausgeben einer Metallschmelze aus einem Schmelzofen. Die erfindungsgemäße Metallschmelzenpumpe ist für Metalle mit niedrigem Schmelzpunkt, wie, z. B. Zink, Zinn, Blei, ggf. Aluminium bzw. deren Legierungen bestimmt, und zwar mit der Zielsetzung, diese Metalle bzw. ihre Legierungen aus dem Schmelzofen herauszusaugen und auszugeben, ohne daß dabei der mit elektrischen Wicklungen versehene Pumpenkörper (Induktor) in den Schmelzofen eingetaucht zu werden braucht. Das Ansaugen der Schmelze mit der Pumpe und das Ausgeben wird im Sinne der Erfindung derart durchgeführt, daß in die in dem Schmelzofen befindliche Metallschmelze nur eine Saugröhre mit einem kleineren Durchmesser eintaucht, die im Vergleich zu dem Pumpenkörper bzw. der Öffnung des Schmelzofens äußerst kleine Abmessungen hat.

Zum Fördern einer Metallschmelze und zum Ausgeben derselben aus dem Schmelzofen sind bereits zahlreiche elektromagnetische Metallschmelzenpumpen bekanntgeworden.

Eine derartige Ausführungsform ist u. a. in der DE-C-2 304 257 beschrieben. Bei dieser Lösung muß wenigstens ein Teil der Pumpe in die in dem Ofen befindliche Metallschmelze eingetaucht werden, was für die Wicklung der Pumpe eine zu hohe thermische Beanspruchung bedeutet. Diese Pumpe kann außerdem für Schmelzöfen mit sehr enger Öffnung nicht verwendet werden, weil derjenige der Teile der Schmelzenpumpe, der durch die enge Öffnung des Schmelzofens hindurch in diesen eingetaucht werden müßte, wegen seiner größeren Abmessungen nicht eingeführt werden kann.

Eine elektromagnetische Schmelzenpumpe, ebenfalls zur Ausgabe von Metallschmelzen, wurde in der DE-Zeitschrift « Gießerei 69 », 1982, Nr. 20 (27. September) S. 575-579, veröffentlicht. Obwohl bei dieser Ausführungsform die Pumpe selbst nicht unmittelbar in die Metallschmelze eingetaucht wird, wird sie unmittelbar an den Schmelzofen angeschlossen. Zum Betrieb dieser Anlage muß man in dem geschlossenen Ofen — mit Hilfe einer äußeren Hilfsanordnung — den Inertgasdruck des Schmelzofens erhöhen, um dadurch die Metallschmelze in die Pumpe hineinzutreiben. Diese Forderung beansprucht eine druckfeste Schmelzofenkonstruktion, was den Kostenaufwand für die Anlage bedeutend erhöht. In den Pausen zwischen den Ausgabeintervallen läßt die Pumpe die Metallschmelze fallen. Um dies zu vermeiden, muß ein Fußventil eingebaut werden, oder die Pumpe muß mit einer Grunderregung vorbestimmter Intensität versehen werden. Die Herstellung eines entsprechenden Fußventiles — wie bekannt — ist besonders für die Anwendung desselben für Metallschmelzen eine schwierige Aufgabe, und zwar deswegen, weil die Anwendung der Pumpen-Erregung zwecks Verhinderung des Zurücksackens der Metallschmelze leicht zur Oberhitzung der in der Pumpe zurückzuhaltenden Schmelze führen kann.

Wie bekannt, liegt ein gemeinsamer Vorteil elektromagnetischer Metallschmelzenpumpen darin, daß diese keine beweglichen Bestandteile enthalten. Die zum Fördern der Metallschmelze erforderliche Krafteinwirkung wird durch ein elektromagnetisches Kraftfeld erzeugt. Demzufolge ist leicht einzusehen, daß dann, wenn die oben erwähnten Nachteile der herkömmlichen Lösungen beseitigt werden, der Anwendungsbereich der elektromagnetischen Metallschmelzenpumpen weiter verbreitet werden kann ; man könnte weiter einfache, billigere, betriebssichere und in ökonomischer Hinsicht vorteilhaftere Metallschmelzenpumpen herstellen.

Das Ziel der Erfindung ist die Schaffung einer elektromagnetischen Metallschmelzenpumpe, bei welcher zu ihrem Betrieb der gewickelte Induktor der Pumpe nicht in die Metallschmelze eingetaucht zu werden braucht und die Anwendung einer Hilfsanordnung nicht erforderlich ist, um sicherzustellen, daß in jedem einzelnen Ausgabezyklus die Metallschmelze in die aktive Zone der Pumpe gelangt.

Die konstruktive Ausbildung der elektromagnetischen Pumpe gamäß der Erfindung stellt sicher, daß unter den Betriebsverhältnissen nur eine Saugröhre der Pumpe mit geringem Durchmesser in die Metallschmelze eingetaucht zu werden braucht. Die konstruktive Ausbildung ermöglicht, daß der gewickelte Induktor der Pumpe entfernt von dem Schmelzofen in einem Atmosphärentemperaturbereich bzw. an einer von dem Schmelzofen entfernten Stelle der Werkstatt angeordnet sein kann. Die Pumpe gemäß der Erfindung kann daher durch ihre Saugröhre aus dem Schmelzofen — aus einer Tiefe, die vom atmosphärischen Druck und der Dichte der Metallschmelze abhängt — die Metallschmelze heraussaugen und ausgeben. Es soll erwähnt werden, daß von dem Beginn des Betriebes diejenigen Teile der Pumpe, die mit der Metallschmelze in Berührung stehen werden, vorher auf die Temperatur der Metallschmelze erwärmt werden sollen. Dieses Vorwärmen kann durch eingebaute Heizkörper und durch mit dem Induktor bewirkte Induktionsheizung sichergestellt werden.

Der Luftunterdruck, der zum Ansaugen der Metallschmelze erforderlich ist, wird vor dem Beginn des Betriebes und nach dem erwähnten Vorwärmen durch ein einziges Auffüllen der Pumpe, und nach dem Begin des Betriebes durch die Pumpe selbst ohne Anwendung beweglicher Bestandteile durchgeführt. Nach dem Stillsetzen der Pumpe kann ein erneuter Ausgabezyklus durch eine erneute Erregung des Induktors wiederbeginnen. Die Ausgabeintensität kann durch Einstellen bzw. eine Änderung der Erregung des Induktors verändert werden.

Die elektromagnetische Metallschmelzenpumpe gemäß der Erfindung kann ggf. auch für die Bedienung mehrerer Schmelzöfen verwendet werden.

2

Gegenstand der Erfindung ist eine elektromagnetische Metallschmelzenpumpe, die nach Aufheizung und einmaliger Auffüllung ohne Anwendung von beweglichen Bestandteilen den erforderlichen Saugdruck selbst erzeugen kann — wonach die Saugröhre in den Schmelzofen — der die Metallschmelze enthält — eingetaucht wird, damit die elektromagnetische Schmelzenpumpe die in dem Schmelzofen vorhandene Metallschmelze aus einer Tiefe, die von dem atmosphärischen Druck und der Dichte der Metallschmelze abhängt, heraussaugt und abgibt.

Die Erfindung betrifft daher eine elektromagnetische Metallschmelzenpumpe zum Ansaugen und Ausgeben von Metallschmelze aus einem Schmelzofen in einen mit einer Wärmeisolation versehenen Metallschmelzenbehälter. Dieser ist auf einer Grundplatte angeordnet, auf welcher ein Mantel und ein Induktor befestigt sind. Der Induktor enthält einen aus Platten hergestellten Eisenkörper und in den Nuten des Eisenkörpers angeordnete mehrphasige Wicklungen. Der Metallschmelzen-Behälter ist aus nichtmagnetisierbarem Material hergestellt.

Das Wesen der Erfindung liegt insbesondere darin, daß in den Metallschmelzen-Behälter eine Saugröhre koaxial hineinragt, die aus drei Hauptbestandteilen besteht. Der erste ist ein zwischen den die Eintauchtiefe der Saugröhre in den Metallschmelzenbehälter bestimmenden Punkten der Anlage verlaufender Röhrenabschnitt mit einem den magnetischen Kreis des Induktors schließenden Volumen ; der zweite Bestandteil ist ein Pufferbehälter, der das Entstehen eines Unterdrucks bewirkt ; der dritte Bestandteil ist ein Ansaugrohr, das in die Metallschmelze im Schmelzofen eingetaucht wird und das mit einem Luftverdünnung sicherstellenden Volumen ausgestattet ist. Die Saugröhre ist mit eine regelbare Heizung sicherstellenden Heizkörpern und einer Wärmeisolierung versehen. Die Grundplatte des Schmelzenbehälters ist auf einer Hebe- und Kippplatte einer Hebevorrichtung festgelegt, wobei die Saugröhre an einer um ihre Achse verdrehbar angeordneten Hubstange der Hebevorrichtung befestigt ist.

Gemäß einer vorteilhaften Ausführungsform der Erfindung ist die Saugröhre mit einem die Eintauchtiefe der Saugröhre bestimmenden Abstandshalteranschlag ausgerüstet.

Nach einer weiteren vorteilhaften Ausführungsform der Erfindung ist eine Hilfshebevorrichtung vorgesehen, die ggf. mit der Hebe- und Kippplatte der Hebevorrichtung gemeinsam hoch-hebbar ausgebildet ist. Die Metallschmelzenpumpe gemäß der Erfindung kann in zahlreichen Ausführungsformen im Sinne der Erfindung ausgebildet werden. Zwecks näherer Erläuterung der Erfindung wird nachstehend ein Ausführungsbeispiel anhand von Zeichnungen erläutert, nach dem die elektromagnetische Schmelzenpumpe gemäß der Erfindung mit einem zylindersymmetrischen Induktor ausgerüstet ist.

Fig. 1   zeigt das Ausführungsbeispiel der erfindungsgemäßen elektromagnetischen Metallschmelzenpumpe in Draufsicht und

Fig. 2   zeigt die Metallschmelzenpumpe aus Fig. 1 mit einem Tiegelschmelzofen im Vertikalschnitt.

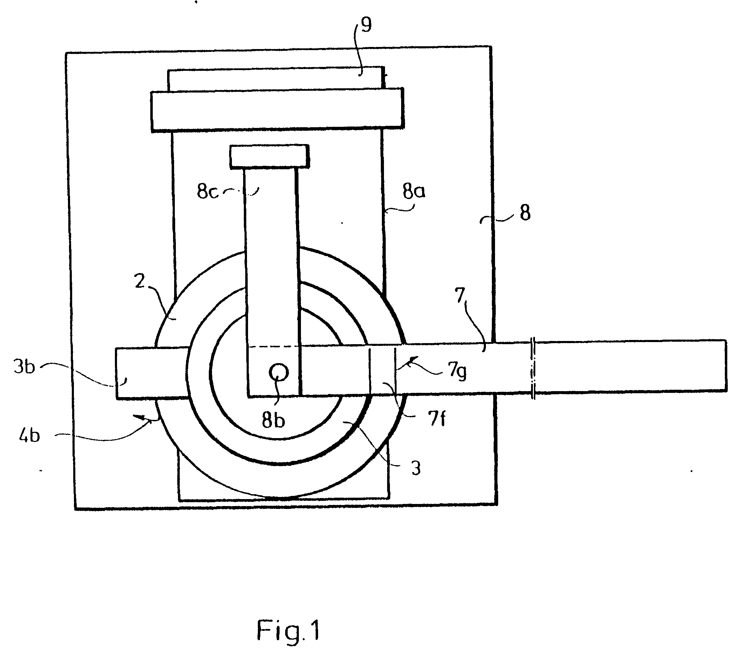

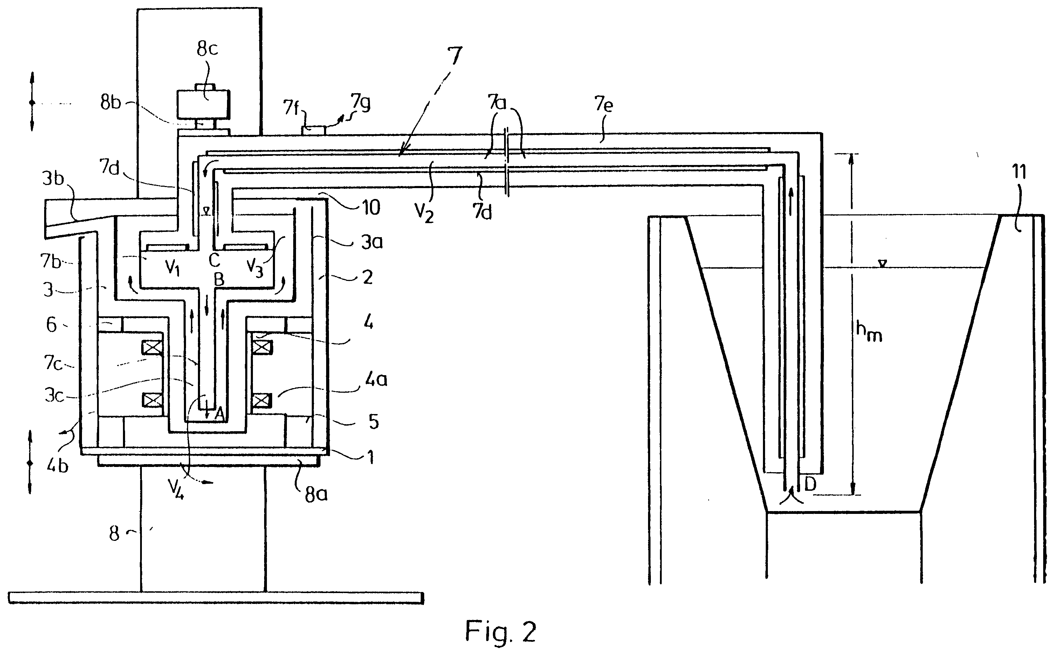

Wie aus Fig. 1 und 2 ersichtlich, sind an einer Grundplatte 1 ein Mantel 2 und über Befestigungselemente 5 ein innerhalb des Mantels 2 angeordneter Induktor festgelegt, der aus einem aus Platten hergestellten Eisenkörper 4 und aus in dessen Nuten angeordneten mehrphasigen Wicklungen 4a besteht. Auf dem Eisenkörper 4 ist über Befestigungselemente 6 ein mit einer Wärmeisolation 3a versehener, aus dia- und paramagnetischem Material hergestellter zylindersymmetrischer Metallschmelzenbehälter 3 angeschlossen. Der Metallschmelzenbehälter 3, an dessen oberen Rand eine Ausgabeschnauze 3b angesetzt ist, ist im Axialschnitt gestuft ausgebildet und ragt mit seinem unteren Behälterteil kleineren Durchmessers durch den Innenraum des ringförmigen Induktors hindurch nach unten. Der Induktor, hergestellt aus dem aus Platten zusammengestellten Eisenkörper 4 und den Wicklungen 4a, erhält elektrische Speisung durch ein Kabel 4b. In den Metallschmelzenbehälter 3 taucht die Saugröhre 7 koaxial ein. Die Saugröhre 7 ist insgesamt U-förmig ausgebildet. Zwischen dem Behälterrand und dem Steg der U-förmigen Saugröhre 7 ist ein die Eintauchtiefe des in den Schmelzenbehälter 3 koaxial eintauchenden Schenkels der U-förmigen Saugröhre 7 zwischen den aus Fig. 2 ersichtlichen Punkten A und B bestimmender Abstandshalter 10 angeordnet.

Die Saugröhre 7 kann in drei Hauptteile unterteilt werden :

1) der unterste Röhrenabschnitt 7c des in den Behälter 3 eintauchenden U-Schenkels zwischen den Punkten A und B mit einem Volumen $V_4$ ragt in den Induktor 4, 4a koaxial hinein und hat die Aufgabe, den magnetischen Kreis des Induktors derart zu schließen, daß dessen magnetisches Feld in das Volumen $V_4$ nicht hineinreicht ;

2) Ein auf den Röhrenabschnitt 7c aufgesetzter Pufferbehälter 7b zwischen den Punkten B und C mit einem inneren Volumen $V_1$, hat die Aufgabe, in der Pumpe einen luftverdünnten Raum sicherzustellen, wenn im gefüllten Zustand der Pumpe der Punkt D und der Mündung des anderen U-Schenkels der Saugröhre 7, der in den Schmelzofen 11 eingetaucht wird, unterhalb des abzusaugenden Pegels im Ofen liegt.

3) Der Saugröhrenabschnitt 7a, der von der Deckenwand der Pufferbehälters 7b aus zuerst koaxial zu dem Behälter 3 nach oben und dann entlang des U-Steges der Saugröhre 7 und des in den Ofen 11 eintauchenden U-Schenkels zwischen den Punkten C und D verläuft, stellt mit seinem inneren Volumen $V_2$ ebenfalls einen luftverdünnten Raum sicher, wenn der Punkt D im Betriebszustand unterhalb des Pegels des Metallschmelze im Schmelzofen 11 liegt.

Die Saugröhre 7 ist zwecks Heizung und Warmehaltens mit temperaturregelbaren Heizkörpern 7d und einer äußeren Wärmeisolation 7e versehen. Die Heizkörper 7d werden über einen elektrischen Verteiler 7f mittels eines freischwingenden Kabels 7g mit elektrischem Strom gespeist. Die Grundplatte 1 ist auf der Hebe- und Kippplatte 8a der Hebeeinrichtung 8 festgelegt und die Saugröhre 7 ist an der Hubstange 8b der Hebenvorrichtung 8 abgestützt. Die Hebestange 8b kann zum Verschwenken der Saugröhre 7 um die Achse des Behälters 3 mittels der Hilfshebeanordnung 8c um ihre eigene Achse verdreht werden. Die Hilfshebeanordnung 8c kann einzeln und mit der Hebeplatte 8a gemeinsam hochgefahren werden.

Die Steuerung der kompletten elektromagnetischen Pumpe wird von einer in einem Steuerschrank 9 angeordneten, an sich bekannten Steueranordnung durchgeführt. Die freischwingenden Kabel 4b und 7g sind ebenfalls hier angeschlossen.

Die Inbetriebnahme der Pumpe und die Wirkungsweise derselben ist die folgende :

Der Behälter 3 der Pumpe wird bis zum Pegel der Ausgußschnauze 3b mit Metallschmelze gefüllt. Zu diesem Zeitpunkt ist der Punkt D der Saugröhre 7 noch nicht in den Ofen eingetaucht, jedoch taucht die Saugröhre 7 mit ihrem Röhrenabschnitt 7c und ihrem Pufferbehälter 7b soweit in den Schmelzbehälter 3 ein, daß die Deckenwand des Pufferbehälters unterhalb des Flüssigkeitsspiegels im Schmelzenbehälter 4 angeordnet ist. Danach wird die Grundplatte 1 mitsamt dem Schmelzenbehälter 4 mittels der Hebeplatte 8a der Hebevorrichtung 8 angehoben, und zwar zusammen mit der Hilfshebeanordnung 8c und der Saugröhre 7, die an dieser Grundplatte abgestützt sind. Der Punkt D der Saugröhre 7 wird in Richtung des Ofens verschwenkt und zwar um die Achse der Hebestange 8b, wonach die Grundplatte 1 mit dem Schmelzenbehälter 4, der Hilfshebeanordnung 8c und der Saugröhre 7 mittels der Hebeplatte 8a wieder abgesenkt werden und daher der Punkt D der Saugröhre 7 unterhalb des Pegels der Metallschmelze in dem Ofen 11 zu liegen kommt.

Falls eine elektrische Spannung, deren Phasenzahl mit der Phasenzahl der Wicklung gleich ist, der Phasenreihe der Wicklungen entsprechend an die Wicklungen 4a des aus dem Bestandteilen 4 und 4a zusammengestellten Induktors geschaltet wird, so erzeugt der Induktor ein magnetisches Feld, das von unten nach oben in radiale Richtung im Ringraum 3c zwischen dem ferromagnetischen Saugröhrenabschnitt 7c und dem Boden des Metallschmelzenbehälters 3 verläuft, so daß durch dieses magnetische Feld in der Schmelze in diesem Ringraum 3c eine Wechselspannung induziert wird.

Durch die Einwirkung der auf diese Weise induzierten Spannung werden im Raum 3c Wirbelströme erzeugt. Die Gegenwirkung dieser Wirbelströme und der magnetischen Felder der Wicklungen 4a bewirken im Raum 3c eine Bewegung der Metallschmelze nach oben — veranschaulicht in der Zeichnung durch einen Pfeil —, wodurch die Schmelze über die Ausgußschnauze aus dem Behälter 3 herausfließt und das Schmelzenvolumen $V_1$ des Pufferbehälters 7b entleert wird.

Im Verlauf der Entleerung des Volumens $V_1$ entsteht in dem Volumen $V_1$ und $V_2$ eine Luftverdünnung und daher ein Unterdruck, so daß durch die Einwirkung desselben die Metallschmelze an dem Punkt D in die Saugröhre 7 hineinfließt.

Das Verhältnis der Volumina $V_1$ und $V_2$ muß derart gewählt werden, daß die nachstehende Ungleichung erfüllt ist :

$$p_0\left(1 - \frac{V_2}{V_1 + V_2}\right) > \gamma_f\, h_m + p_v$$

worin bedeuten :

$p_0$ = den atmosphärischen Druck ;

$\gamma_f$ = die Wichte der Metallschmelze ;

$p_v$ = die Strömungsverluste ;

$h_m$ = die Saughöhe, d. i. die Höhe des U-Steges der Saugröhre 7 über deren Punkt D (vgl. Fig. 2).

Nach dem Abschalten der Erregung der Wicklungen 4a sinkt der Schmelzenspiegel im Behälter 3, so daß das Volumen $V_1$ von der Metallschmelze des Volumens $V_3$ des Behälters 3 über dem Pufferbehälter 7b wieder aufgefüllt wird ; deshalb muß die Geometrie der Behälter 3, 7b und 7c derart bemessen werden, daß die Ungleichung $V_3 > (V_1 + V_4)$ erfüllt ist, worin $V_4$ das Innenvolumen des Rohrabschnittes 7c bedeutet.

Falls an die Wicklung 4a die Erregung erneut angeschaltet wird, so füllt die Pumpe zuerst das Volumen $V_3$ wieder auf, wonach die Ausgabe der Schmelze wieder beginnt. Dies bedeutet, daß die Ausgabe immer wieder wiederholt werden kann.

Falls der Betrieb der Pumpe nach der Absaugung des Ofens beendet werden soll, so wird die Saugröhre 7 aus dem Behälter 3 mit Hilfe der Hilfshebeanlage 8c soweit angehoben, daß der Punkt A der Saugröhre 7 oberhalb des Mantels 2 angeordnet ist. In dieser Lage kann aus dem Behälter 3 die noch darin vorhandene Metallschmelze mit Hilfe der Hebe- und Kippplatte 8a herausgekippt werden. Nach dem Zurückkippen der Hebe- und Kippplatte 8a kann die Saugröhre 7 mittels der Hilfshebeanlage 8c in den entleerten Behälter 3 zurückgesenkt werden.

**Patentansprüche**

1. Elektromagnetische Metallschmelzenpumpe zum Ansaugen und Ausgeben der Metallschmelze aus einem Schmelzofen (11) in einen mit einer Wärmeisolation (3a) versehenen Metallschmelzenbehälter (3) aus einem nicht magnetisierbaren Material, der auf einer Grundplatte (1) angeordnet ist, auf der ein Mantel (2) und ein Induktor festgelegt sind, der einen aus Platten zusammengestellten Eisenkörper (4) und in den Nuten dieses Eisenkörpers (4) angeordnete mehrphasige Wicklungen (4a) enthält, dadurch gekennzeichnet, daß in den Metallschmelzenbehälter (3) eine Saugröhre (7) koaxial eintaucht, die aus drei Hauptteilen besteht, nämlich aus einem die Eintauchtiefe bestimmenden, den magnetischen Kreis des Induktors mit einem Volumen (V₄) schließenden Saugröhrenabschnitt (7c), einem ein verdünntes Luftvolumen herbeiführenden Pufferbehälter (7b) und einem in die Metallschmelze des Ofens (11) eintauchbaren Saugröhrenabschnitt (7a), daß die Saugröhre (7) mit regelbaren Heizkörpern (7d) und mit einer Wärmeisolierung (7e) versehen ist, daß die Grundplatte (1) auf einer Hebe- und Kippplatte (8a) einer Hebeeinrichtung (8) festgelegt ist, und daß die Saugröhre (7) an einer um ihre Achse drehbaren Hubstange (8b) der Hebevorrichtung (8) abgestützt ist.

2. Elektromagnetische Metallschmelzenpumpe nach Anspruch 1, dadurch gekennzeichnet, daß die Saugröhre (7) einen die Eintauchtiefe bestimmenden Abstandshalter (10) aufweist.

3. Elektromagnetische Metallschmelzenpumpe nach einem der Patentansprüche 1 oder 2, dadurch gekennzeichnet, daß eine Hilfshebeanordnung (8c) vorgesehen ist, mittels welcher die Saugröhre (7) anhebbar ist und welche ggf. mit der Hebe- und Kippplatte (8a) gemeinsam anhebbar ist.

**Claims**

1. Electromagnetic metal melt pump for pumping out and discharging the metal melt from a furnace (11) into a metal melt tank (3) made of not magnetizable material and provided with a heat insulation (3a), said tank being placed on a base plate (1), on which a housing (2) and an inductor are fixed, which comprises an iron body (4) made from plates and multiphase windings (4a) arranged in the grooves of this iron body, characterized in that into the metal melt tank (3) a suction tube (7) is coaxially immersed which consists of three main parts, namely of a suction tube section (7c) determining the depth of immersion and closing the magnetic circuit of the inductor with a volume (V₄), of a buffer tank (7b) producing a reduced air pressure volume and of a suction tube section (7a) which can be immersed into the metal melt of the furnace (11), that the section tube (7) is provided with controllable heaters (7d) and with heat insulation (7c), that the base plate (1) is fixed onto a lifting and tilting plate (8a) of a lifting equipment (8) and that the suction tube (7) is attached to a lifting rod (8b) of the lifting equipment which tilting rod can be rotated around its axis.

2. Electromagnetic metal melt pump according to claim 1, characterized in that the suction tube (7) has a spacer (10) determining the depth of immersion.

3. Electromagnetic metal melt pump according to one of the claims 1 or 2, characterized in that an auxiliary lifting device (8c) is provided, by means of which the suction tube (7) can be lifted and which — if necessary — can be lifted together with the lifting and tilting plate.

**Revendications**

1. Pompe électromagnétique pour métaux en fusion destinée à aspirer le métal en fusion à partir d'un four de fusion et à le distribuer dans un récipient pour métal en fusion muni d'une isolation calorifique, formé d'un matériau non aimantable, qui est disposée sur une plaque de base sur laquelle sont fixés une enveloppe et un inducteur qui comprend un corps de fer constitué par des plaques, ainsi que des enroulements polyphasés disposés dans les rainures dudit corps de fer, caractérisé en ce qu'un tube d'aspiration (7) plonge coaxialement dans le récipient pour métal en fusion (3), ledit tube étant constitué par trois parties principales, à savoir : un segment de tube d'aspiration (7c) déterminant la profondeur d'immersion et formant avec un volume (V₄) le circuit magnétique de l'inducteur, un récipient tampon (7b) amenant un volume d'air raréfié, et un segment de tube d'aspiration (7) susceptible de plonger dans le métal en fusion du four (11), en ce que le tube d'aspiration (7) est pourvu d'éléments chauffants (7a) réglables et d'une isolation calorifique (7e) en ce que la plaque de base (1) est fixée sur une plaque élévatrice et basculable (8a) d'un dispositif élévateur (8) et en ce que le tube d'aspiration (7) prend appui sur une tige de levage (8b) du dispositif élévateur (8), qui est montée à rotation autour de son axe.

2. Pompe électromagnétique pour métaux en fusion selon la revendication 1, caractérisée en ce que le tube d'aspiration (7) comporte une pièce de maintien à distance (10) déterminant la profondeur d'immersion.

3. Pompe électromagnétique pour métaux en fusion selon une des revendications 1 ou 2, caractérisée en ce qu'il est prévu un dispositif élévateur auxiliaire (8c) permettant de soulever le tube d'aspiration (7) et pouvant, le cas échéant, être soulevé en même temps que la plaque élévatrice et basculable (8a).

Fig.1

Fig. 2

EP 0 127 755 B1